# EUROPEAN PATENT APPLICATION

(11) **EP 2 302 627 A1**
(43) Date of publication of application: **30.03.2011**
(21) Application number: 09305870.9
(22) Date of filing: 18.09.2009
(51) Int. Cl.: G11B 7/007, G11B 7/24, G11B 7/26

(54) **Hybrid read-only and recordable optical recording medium**

(71) Applicant: Thomson Licensing, 92130 Issy-les-Moulineaux (FR)
(72) Inventor: Knappmann, Stephan, 78658 Zimmern ob Rottweil (DE); Krause, Michael, 78050 Villingen-Schwenningen (DE)
(74) Representative: Schmidt-Uhlig, Thomas

(57) **Abstract**

The present invention relates to an optical recording medium (8) having at least one read-only area and at least one recordable or rewritable area, as well as to a method for manufacturing such an optical recording medium (8).

The optical recording medium (8) has at least a first data layer (L0, L1) and a second data layer (L0, L1). While the first data layer (L0, L1) is of a first type, the second data layer (L0, L1) has a part of the first type in an outer area of the optical recording medium (8) and a part of a second type in an inner area of the optical recording medium (8), or a part of the first type in the inner area of the optical recording medium (8) and a part of a second type in the outer area of the optical recording medium (8).

## Description

The present invention relates to a hybrid optical recording medium having at least one read-only area and at least one recordable or rewritable area. More specifically, the invention relates to a hybrid optical recording medium that allows for an unequal distribution of capacities between the read-only and recordable or rewritable areas.

A hybrid optical recording medium combines two or more types of optical recording media on a single optical recording medium. For example, a DVD (Digital Versatile Disc) combined with a BD (Blu-Ray Disc) has been proposed in US 2006/0179448. Other hybrid optical recording media combine ROM formats and recordable formats on a single optical recording medium. In addition to the known benefits of a ROM disc such a disc offers many options for useful applications by the use of the recordable area. For example, copy protection or licensing information can be recorded in the recordable area.

In this respect US 2007/0002699 discloses a hybrid Blu-Ray Disc. The disc has three layers, namely a BD-ROM layer (read-only), a BD-R layer (recordable), and a BD-RE layer (rewritable).

Furthermore, it has been suggested to combine BD-ROM and BD-RE into a dual layer hybrid disc. A first layer L0 complies with the BD-RE book, whereas a second layer L1 is consistent with the BD-ROM standard. The disc includes a separate volume structure with separate disc information on each layer. Both layers are independent from each other. The parallel track path directions are from inner diameter to outer diameter on both layers. Further information about the BD-ROM and BD-RE format, as well as the physical structure of single and dual layer BD discs, is given in the BD White Papers that are available for download at the official web site of the Blu-Ray Disc Association, www.bluraydisc.com. Additional details are available for download at the web site of the T10 Technical Committee of the International Committee on Information Technology Standards (INCITS), www.t10.org.

According to the BD-ROM and BD-RE books the capacity of the proposed dual layer hybrid disc would be 25GB (or 27GB, depending on the channel bit length) in each of the read-only and the rewritable parts of the disc. Thus the disc offers equal shares of capacity for the read-only and the rewritable parts. However, many applications do not require an equal share of capacities between read-only and recordable/rewritable areas. Often only a small fraction of the capacity is needed for one type of format, while the capacity for the other type of format should be maximized. For example, to include licensing information a small rewritable area would be sufficient, while at the same time it would be desirable to expand the read-only area to capacities above 25GB (or above 27GB, depending on the channel bit length).

It is thus an object of the invention to propose a hybrid optical recording medium having at least one read-only area and at least one recordable or rewritable area, which allows for an unequal distribution of capacities between the read-only and recordable or rewritable areas.

According to the invention, this object is achieved by an optical recording medium with at least a first data layer and a second data layer, the first data layer being of a first type and the second data layer either having a part of the first type in an outer area of the optical recording medium and a part of a second type in an inner area of the optical recording medium or a part of the first type in the inner area of the optical recording medium and a part of a second type in the outer area of the optical recording medium.

A basic idea of the present invention is to divide the second data layer into two separate parts, i.e. to have a dual format layer in addition to a single format layer. One part is used as a read-only area, while the other part is used as a recordable or rewritable area. The invention is suitable for applications that require a larger capacity for the read-only area, but also for applications that require a larger capacity for the recordable or rewritable area. Advantageously, a spiral direction of a track in the part of the first type is opposite to a spiral direction of a track in the part of the second type. This allows to improve the compatibility with existing players and recorders.

In case a larger capacity is required for the read-only area, the first type is a read-only type and the second type is a recordable or rewritable type. This means that the first data layer is a read-only layer, whereas the second data layer contains a read-only part in an outer area and a recordable or rewritable part in an inner area. Such an optical recording medium will be recognized as a read-only optical recording medium by existing players, i.e. such players are capable of playing the read-only part on the first data layer and the second data layer. The recordable or rewritable part on the second data layer will simply be ignored. In contrast, new players or recorders identify the hybrid structure and use both the read-only part and the recordable or rewritable part.

In case a larger capacity is required for the recordable or rewritable area, the first type is a recordable or rewritable type and the second type is a read-only type. In this case the first data layer is a recordable or rewritable layer, whereas the second data layer contains a recordable or rewritable part in an outer area and a read-only part in an inner area. Again, existing players or recorders are capable of accessing the recordable or rewritable part on the first data layer and the second data layer. Such players or recorders simply ignore the read-only part on the second data layer. New players or recorders identify the hybrid structure and use both the read-only part and the recordable or rewritable part.

Advantageously, the part of the first type in the inner area of the optical recording medium extends to a radius specified for a small capacity version of an optical recording medium of the first type. Similarly, the part of the second type in the inner area of the optical recording medium favorably extends to a radius specified for a small capacity version of an optical recording medium of the second type. Often a small diameter optical recording medium with a smaller capacity is specified in addition to a large diameter version with a larger capacity. Typically the large diameter is 120mm, whereas the small diameter is 80mm. In this case the inner part extends to a radius of 40mm. If the part of the first type or the second type in the inner area of the optical recording medium is compliant with the small capacity version of the optical recording medium of the first type or the second type, at least some existing players or recorders are capable of also accessing this part of the optical recording medium.

The first data layer, i.e. the single format layer, is either the last data layer or the second to last data layer seen in a direction of a reading light beam. Consequently, the second data layer, i.e. the dual format layer, is either the second to last data layer or the last data layer, respectively. Typically the type of optical recording medium is determined based on information located in an innermost area of the last data layer. Therefore, depending on the location of the hybrid data layer in the optical recording medium the type of optical recording medium will be determined differently. This allows to control how existing players or recorders will perceive and handle the hybrid optical recording medium according to the invention. Advantageously, the optical recording medium further has a third data layer. This allows to further increase the capacity of the optical recording medium. The third data layer preferably is of the first type or the second type. It may of course likewise be of a different type. For example, the optical recording medium may contain a read-only layer, a hybrid layer with a recordable part and a read-only part, and a rewritable layer. Preferably, the third data layer is the third to last data layer seen in a direction of a reading light beam.

Advantageously, an inner radius of a data area of the third data layer is larger than an inner radius of a data area of the first data layer. As a consequence, a legacy player or recorder does not see the third data layer and starts playing the optical recording medium at the last data layer. Subsequently it will switch to the second to last data layer. A good compatibility with existing players and recorders is thus achieved.

Preferably, the data layers are adapted to be read at a wavelength around 405nm. In this way the invention is applicable to current high-density optical recording media, e.g. a Blu-Ray Disc as specified in the BD White Papers.

Favorably, a method for forming a master for a stamper for an optical recording medium according to the invention includes the steps of:
- applying a homogeneous photoresist onto a master, e.g. a glass substrate or a silicon wafer,
- forming pits in an area of the master corresponding to a read-only area of the optical recording medium by an exposure of the photoresist, and
- forming grooves in an area of the master corresponding to a recordable or rewritable area of the optical recording medium by a partial exposure of the photoresist.

The method has the advantage that the master for the stamper for the hybrid layer is produced with only a small modification of known mastering processes, namely the partial exposure of the photoresist for the recordable or rewritable area. Therefore, the mastering method can be implemented with limited effort.

Alternatively, a method for forming a master for a stamper for an optical recording medium according to the invention includes the steps of:
- applying a homogeneous photoresist onto a master, e.g. a glass substrate or a silicon wafer,
- forming grooves in an area of the master corresponding to a recordable or rewritable area of the optical recording medium by an exposure of the photoresist,
- applying further photoresist in an area of the master corresponding to a read-only area of the optical recording medium, and
- forming pits by an exposure of the photoresist in the area of the master corresponding to the read-only area of the optical recording medium.

As no partial exposure is performed, the requirements regarding the exposure control are more relaxed. However, an additional application of a photoresist to a controlled area of the master is required. In addition, this process leads to different stamper thicknesses of the read-only area and the recordable or rewritable area of the hybrid layer. This does, however, not constitute a problem, as lead-out zones provided between the two parts of the hybrid layer act as a buffer zone.

In any case, the stamper is formed from the master using a conventional electroforming process or any other suitable process.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically depicts an apparatus for reading from and/or writing to a hybrid optical recording medium,
- Fig. 2: illustrates the use of the information area of a dual layer Blu-Ray disc,
- Fig. 3: shows a first embodiment of a hybrid optical recording medium according to the invention,
- Fig. 4: illustrates a second embodiment of a hybrid optical recording medium according to the invention, which is a modification of the hybrid optical recording medium of Fig. 3,
- Fig. 5: depicts a third embodiment of a hybrid optical recording medium according to the invention,
- Fig. 6: shows a fourth embodiment of a hybrid optical recording medium according to the invention, which is a further modification of the hybrid optical recording medium of Fig. 3,
- Fig. 7: depicts a depicts a fifth embodiment of a hybrid optical recording medium according to the invention, which is a modification of the hybrid optical recording medium of Fig. 6,
- Fig. 8: illustrates a sixth embodiment of a hybrid optical recording medium according to the invention, which is a modification of the hybrid optical recording medium of Fig. 5,
- Fig. 9: illustrates a seventh embodiment of a hybrid optical recording medium according to the invention, and
- Fig. 10: shows an eighth embodiment of a hybrid optical recording medium according to the invention.

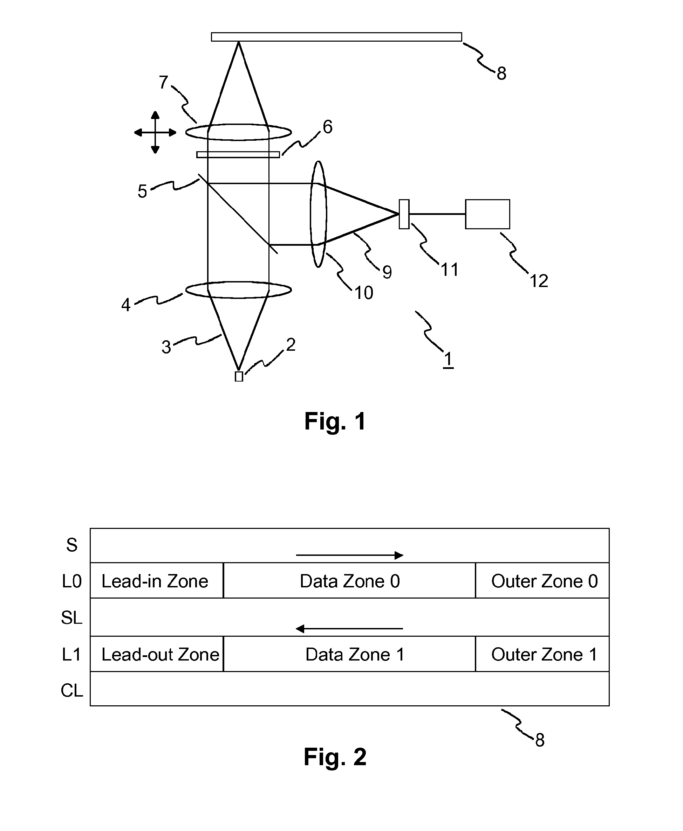

In Fig. 1 an apparatus 1 for reading from and/or writing to a hybrid optical recording medium 8 having a read-only area and a recordable area is shown schematically. The recordable area of the hybrid optical recording medium 8 is provided with a guide structure for tracking, usually with a groove structure. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium 8 is collimated by the objective lens 7 and passes the quarter wave plate 6, which transforms the reflected light beam 9 into a linear polarized light beam 9. Due to the quarter wave plate 6, the direction of polarization of the reflected light beam 9 is perpendicular to the direction of polarization of the initial light beam 3. The reflected light beam 9 is thus deflected by the polarization beam splitter 5 towards a focusing lens 10, which focuses the reflected light beam 9 onto a detector 11. An evaluation circuitry 12 evaluates the signals obtained by the detector 11.

In the following the invention is explained with reference to a hybrid Blu-Ray disc. Of course, the invention is not limited to this disc format. The general idea of the invention is also applicable to other formats where large and small diameter optical discs are specified. An example of such a format is the DVD format as specified, for example, in Standard ECMA-267: "120 *mm DVD - Read-Only Disk",* Standard ECMA-268: "80 *mm DVD - Read-Only Disk",* Standard ECMA-337: *"Data Interchange on* 120 *mm and 80 mm Optical Disk using +RW Format - Capacity:* 4,7 *and 1,46 Gbytes per Side",* Standard ECMA-338: "*80 mm* (1,46 *Gbytes per side) and* 120 *mm* (4,70 *Gbytes per side) DVD Re-recordable Disk (DVD-RW)",* Standard ECMA-349: *"Data Interchange on* 120 *mm and 80 mm Optical Disk using +R Format - Capacity:* 4,7 *and* 1,46 *Gbytes per Side",* and Standard ECMA-364: *"Data interchange on* 120 *mm and* 80 *mm Optical Disk using +R DL Format - Capacity:* 8,55 *and 2,66 Gbytes per Side".*

Fig. 2 illustrates the use of the information area of a dual layer Blu-Ray disc 8 (BD-ROM/R/RE 50GB). The disc 8 has a substrate S, a first data layer L0, a spacer layer SL, a second data layer L1, and a cover layer CL. The data layers are accessed through the cover layer CL. The spiral directions of the tracks of the data layers L0, L1 are indicated by arrows. Readout starts on the first data layer L0 at the inner side of the disc 8 with a Lead-in Zone. After reading of the first data layer L0 up to an Outer Zone 0 the second data layer L1 is read starting at the outer side of the disc 8 with an Outer Zone 1 towards a Lead-out Zone at the inner side of the disc 8.

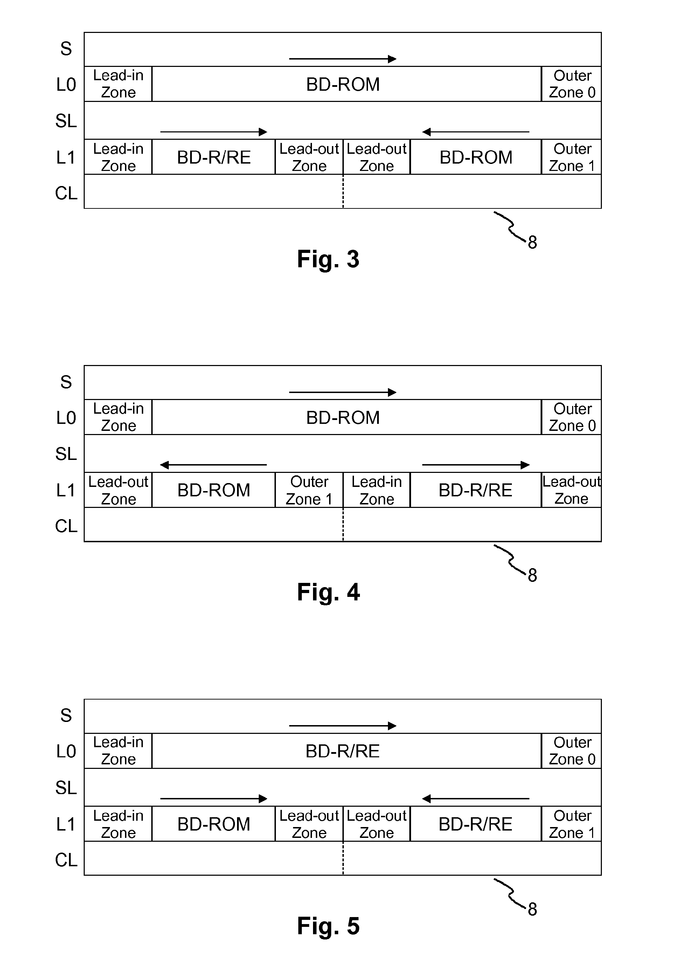

A first embodiment of a hybrid optical recording medium 8 according to the present invention is depicted in Fig. 3. In this embodiment the first data layer L0 is a read-only area with a capacity of 25GB, whereas the second data layer L1 is divided into two separate parts. One part is a read-only area, the other part is a recordable or rewritable area. The rewritable part preferably is compliant with the 80mm diameter version of the BD-R/RE book, which offers a capacity of 7.8GB on the inner part of the divided layer L1. The remaining outer part of the divided layer L1 is used to include a second spiral of a read-only area. The recordable or rewritable part of the divided layer L1 thus covers radii below 40mm (indicated by the dashed line in the cover layer CL), while the remaining outer part of the divided layer L1 contains about 15GB of additional read-only data. This first data layer L0 is a 25GB read-only layer. The spiral direction of the recordable or rewritable part of the second data layer L1 is parallel to the spiral on the first data layer L0. However, the spiral direction in the read-only part of the second data layer L1 is opposite to the direction on the first data layer L0. Therefore, both read-only parts of the first data layer L0 and the second data layer L1 together are basically compliant with the BD-ROM dual layer specifications, except for the fact that on the second data layer L1 the spiral does not end at the innermost diameter, but in between radii 40mm and 41mm. Of course, the sizes of the recordable or rewritable and the read-only parts of the second data layer L1 can likewise be chosen differently to further adapt to the requirements of possible applications. However, if the capacities of the second data layer L1 are divided differently, the BD-R/RE part is no longer compliant with the 80mm version of the BD-R/RE book. In summary, the proposed hybrid optical recording medium constitutes a combination of a dual-layer BD-ROM having a capacity of around 40GB instead of 50GB with a 80mm single layer BD-R/RE offering an additional recording capacity of 7.8 GB.

The above embodiment has the advantage that existing BD-ROM players are capable of playing the BD-ROM part on the first data layer L0 and the second data layer L1 when the disc type is set to BD-ROM. Such players simply ignore the recordable or rewritable part on the second data layer L1. In addition, as the recordable or rewritable part in the second data layer L1 is compliant with the 80mm BD-R/BD-RE specifications, some existing players or recorders are even able to access this part. However, the compatibility of the 80mm recordable or rewritable part with existing players or recorders is limited, since some devices do not accept a single recordable or rewritable layer on the second data layer L1. In contrast, new players or recorders identify the hybrid structure and use both the BD-ROM part and the recordable or rewritable part.

A modification of the embodiment of Fig. 3 is illustrated in Fig. 4. In this embodiment the arrangement of the read-only part and the recordable or rewritable part in the second data layer L1 is reversed.

Fig. 5 shows a third embodiment of a hybrid optical recording medium 8 according to the invention, which is suitable for applications that require a higher capacity for the recordable or rewritable area. According to this embodiment the continuous first data layer L0 is recordable or rewritable with a capacity of 25GB. The second data layer L1 is again divided into two separate parts. In this case the inner part up to a radius of 40mm is a read-only part with a capacity of 7.8GB, while the outer part is a recordable or rewritable part and includes a second spiral of a recordable or rewritable area. This leads to a total of 40GB of recordable or rewritable capacity. However, an 80mm disc has not been specified so far in the BD-ROM book.

Like the first embodiment, the above embodiment has the advantage that existing BD-R/BD-RE players or recorders are capable of accessing the recordable or rewritable part on the first data layer L0 and the second data layer L1 when the disc type is set to BD-R/RE, respectively. Such players or recorders simply ignore the BD-ROM part on the second data layer L1. New players or recorders identify the hybrid structure and use both the BD-ROM part and the recordable or rewritable part.

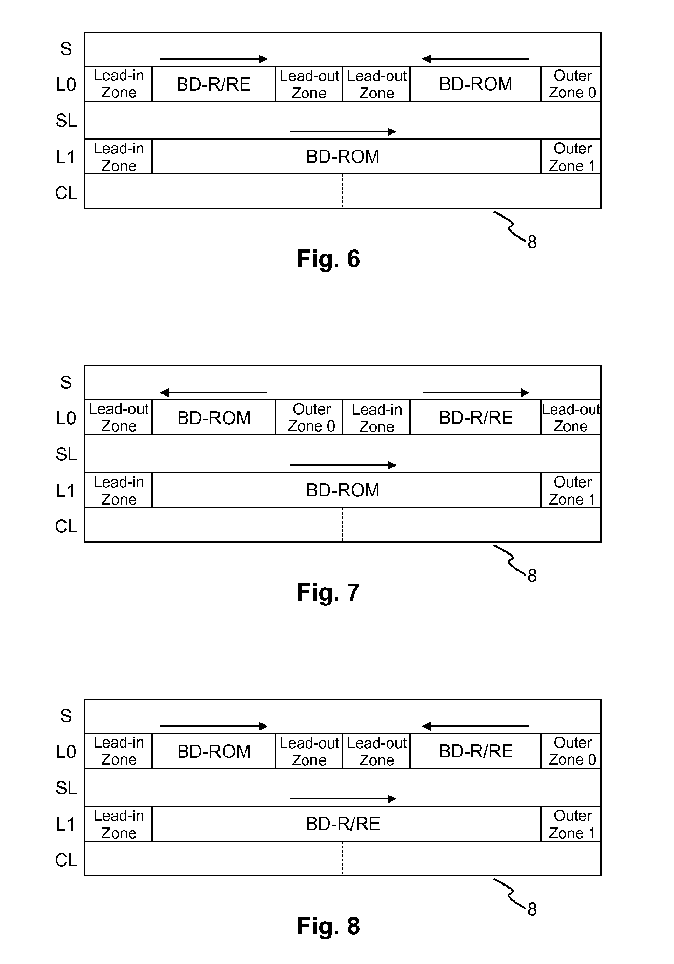

A fourth embodiment of a hybrid optical recording medium 8 according to the invention is depicted in Fig. 6. This embodiment largely corresponds to the embodiment of Fig. 3. However, in this case the first data layer L0 is split into a recordable or rewritable part and a BD-ROM part, whereas the second data layer L1 is a homogeneous BD-ROM layer. Legacy players and recorders will identify the recordable or rewritable part in accordance with the 80mm disc specified in the BD-R/RE book.

A modification of the embodiment of Fig. 6 is illustrated in Fig. 7. In this embodiment the arrangement of the read-only part and the recordable or rewritable part in the second data layer L1 is reversed.

A sixth embodiment of a hybrid optical recording medium 8 according to the invention is illustrated in Fig. 8. This embodiment largely corresponds to the embodiment of Fig. 5. However, as in Fig. 6 the first data layer L0 is split into a recordable or rewritable part and a BD-ROM part, whereas the second data layer L1 is a homogeneous BD-R/RE layer. Though an 80mm BD-ROM has so far not been specified in the BD-ROM book, existing players could in principle accept this type of hybrid optical recording medium 8 as a BD-ROM disc.

Regarding manufacturing of the proposed hybrid optical recording media, the homogeneous layer can be produced by standard processes. Thus, the challenges for manufacturing stem only from the hybrid layer. For BD-ROM a pit depth of 55-65nm is used, while the groove depth for BD-R/ RE is 20-30nm. To combine both on one layer is a challenge for mastering. Preferably a homogeneous photoresist of around 60nm thickness is used. The shallower groove is then achieved by a partial exposure of the resist in the grooved zone. The exposure in the read-only zone, in contrast, is the same as for the standard process. Alternatively, a thinner homogeneous photoresist layer of 20-30nm is applied in a first step. Subsequently additional photoresist is added from radius 40mm to 60mm. This results in a height step between the two parts of the hybrid layer. However, the lead-out zones provide an effective buffer between the two parts. Therefore, the small step of 25-45nm is not seen by the optical pickup during playback. Due to this buffer even small misalignments of the two spiral tracks on the hybrid layer are not an issue. The recording of the groove and pits in the two zones is preferably done with the same mastering equipment. Alternatively, the recording is done independently in a prerecorded mastering system and a recordable mastering system.

The coating of the hybrid layer advantageously is a continuous recordable or rewritable layer that offers sufficient reflectivity to serve as a reflecting layer for the read-only part. Alternatively, separate coatings are applied to the two parts using appropriate masks for the sputtering process. Again, the lead out zones serve as a buffer between the two parts. Therefore, no special alignment of the masks relative to the substrates is needed.

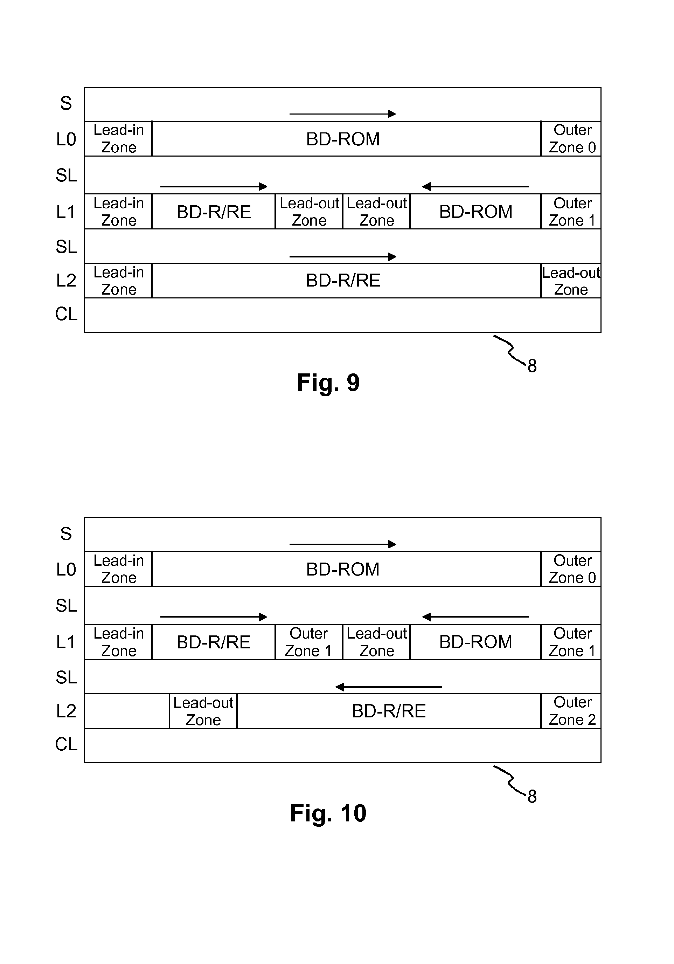

A further possibility to increase the capacities for either the read-only part or the recordable or rewritable part is an extension to three layers. Two examples of a three-layer hybrid optical recording medium 8 are schematically depicted in Figs. 9 and 10. Both examples feature one continuous read-only layer L0, one continuous recordable or rewritable layer L2, and one hybrid layer L1 as described above. Of course, it is likewise possible to combine the hybrid layer L1 with two continuous read-only layers or two continuous recordable or rewritable layers, or even to combine read-only, recordable and rewritable areas.

As before the hybrid layer L1 serves as an instrument to precisely adjust the share between the capacities of the read-only part and the recordable or rewritable part. While the hybrid optical recording medium 8 of Fig. 8 is not compatible with the existing dual layer BD-ROM disc, compatibility is achieved with the hybrid optical recording medium 8 of Fig. 9. For this purpose the third data layer L2 does not fully extend to the inner side of the optical recording medium. Therefore, a legacy BD-ROM player does not see the third data layer L2 and starts playing the hybrid optical recording medium 8 at the first data layer L0. Subsequently it will switch to the second data layer L1. In this case the capacity of the recordable or rewritable area on the third data layer L2 is between 20GB and 25 GB.

## Claims

1. Optical recording medium (8) with at least a first data layer (L0, L1) and a second data layer (L1, L0), wherein the first data layer (L0, L1) is of a first type, **characterized in that** the second data layer (L1, L0) has a part of the first type in an outer area of the optical recording medium (8) and a part of a second type in an inner area of the optical recording medium (8), or a part of the first type in the inner area of the optical recording medium (8) and a part of a second type in the outer area of the optical recording medium (8).

2. Optical recording medium (8) according to claim 1, **wherein** a spiral direction of a track in the part of the first type is opposite to a spiral direction of a track in the part of the second type.

3. Optical recording medium (8) according to claim 1 or 2, **wherein** the first type is a read-only type and the second type is a recordable or rewritable type.

4. Optical recording medium (8) according to claim 1 or 2, **wherein** the first type is a recordable or rewritable type and the second type is a read-only type.

5. Optical recording medium (8) according to one of claims 1 to 4, **wherein** the part of the first type or the second type in the inner area of the optical recording medium (8) extends to a radius specified for a small capacity version of an optical recording medium of the first type or the second type.

6. Optical recording medium (8) according to claim 5, **wherein** the radius is 40mm.

7. Optical recording medium (8) according to one of claims 1 to 6, **wherein** the first data layer (L0) is the last data layer and the second data layer (L1) is the second to last data layer seen in a direction of a reading light beam (3).

8. Optical recording medium (8) according to one of claims 1 to 6, **wherein** the first data layer (L1) is the second to last data layer and the second data layer (L0) is the last data layer seen in a direction of a reading light beam (3).

9. Optical recording medium (8) according to one of the preceding claims, **further** having a third data layer (L2), wherein the third data layer (L2) is of the first type or the second type.

10. Optical recording medium (8) according to claim 9, **wherein** the third data layer (L2) is the third to last data layer seen in a direction of a reading light beam (3).

11. Optical recording medium (8) according to claim 9 or 10, **wherein** an inner radius of a data area of the third data layer (L2) is larger than an inner radius of a data area of the first data layer (L0, L1).

12. Optical recording medium (8) according to one of the preceding claims, **wherein** the part of the first type in the outer area of the optical recording medium (8) has a first thickness and the part of the second type in the inner area of the optical recording medium (8) has a second thickness different from the first thickness.

13. Optical recording medium (8) according to one of the preceding claims, **wherein** the data layers (L0, L1, L2) are adapted to be read at a wavelength around 405nm.

14. Method for forming a master for a stamper for an optical recording medium (8) according to one of claims 1 to 13, **including** the steps of:
- applying a homogeneous photoresist onto a master,
- forming pits in an area of the master corresponding to a read-only area of the optical recording medium (8) by an exposure of the photoresist, and
- forming grooves in an area of the master corresponding to a recordable or rewritable area of the optical recording medium (8) by a partial exposure of the photoresist.

15. Method for forming a master for a stamper for an optical recording medium (8) according to one of claims 1 to 13, **including** the steps of:
- applying a homogeneous photoresist onto a master,
- forming grooves in an area of the master corresponding to a recordable or rewritable area of the optical recording medium (8) by an exposure of the photoresist,
- applying further photoresist in an area of the master corresponding to a read-only area of the optical recording medium (8), and
- forming pits by an exposure of the photoresist in the area of the master corresponding to the read-only area of the optical recording medium (8).
